# FASCICULE DE BREVET EUROPEEN

(11) **EP 1 766 718 B1**
(45) Date de publication et mention de la délivrance du brevet: **10.12.2008**
(21) Numéro de dépôt: 05856227.3
(22) Date de dépôt: 29.06.2005
(51) Int. Cl.: H01M 10/44, H01M 4/48

(54) **PROCEDE DE CHARGE D UN ACCUMULATEUR LITHIUM-ION A ELECTRODE NEGATIVE**
VERFAHREN ZUM LADEN EINER LITHIUMIONEN-BATTERIE MIT EINER NEGATIVEN ELEKTRODE
METHOD OF CHARGING A LITHIUM-ION BATTERY COMPRISING A NEGATIVE ELECTRODE

(30) Priorité: 02.07.2004 FR 0451413
(43) Date de publication de la demande: 28.03.2007
(73) Titulaire: Commissariat à l'Energie Atomique, 75015 Paris (FR)
(72) Inventeur: MARTINET, Sébastien, F-38000 Grenoble (FR); LE CRAS, Frédéric, F-38470 Notre Dame de L'Osier (FR); PERRIN, Dominique, F-38600 Fontaine (FR); MOURZAGH, Djamel, F-38600 Fontaine (FR)
(74) Mandataire: Poulin, Gérard
(86) Numéro de dépôt international: PCT/FR2005/050514
(87) Numéro de publication internationale: WO 2006/097586

(56) Documents cités:
- EP-A- 0 797 283
- EP-A- 0 981 194
- WO-A-99/50925
- US-A1- 2004 029 011
- PATENT ABSTRACTS OF JAPAN vol. 2000, no. 07, 29 septembre 2000 (2000-09-29) & JP 2000 106187 A (TOSHIBA BATTERY CO LTD), 11 avril 2000 (2000-04-11)

## Description

### DOMAINE TECHNIQUE

L'invention concerne un procédé de charge d'un accumulateur lithium-ion à électrode négative à potentiel de fonctionnement supérieur à 0,5 volts par rapport au couple Li+/Li.

Le domaine de l'invention est celui des accumulateurs et, notamment, celui des chargeurs pour accumulateurs et de leurs procédures de charge associées. L'invention concerne plus particulièrement un chargeur associé à un nouveau type d'accumulateurs lithium-ion ou Li-ion, dits « accumulateurs Li-ion de puissance », où l'électrode peut être liquide, gélifié, polymère ou en sel fondu.

### ÉTAT DE LA TECHNIQUE ANTÉRIEURE

Chaque technologie d'accumulateurs (Ni-Cd, Ni-MH, ou Li-ion) possède une procédure de charge propre avec une détection de fin de charge qui est optimisée en fonction de la chimie de l'accumulateur.

La demande de brevet FR 2 733 093 décrit, ainsi, un procédé de charge d'accumulateur rechargeable, et plus particulièrement d'un accumulateur à ions lithium (Li-ion), qui comprend les étapes suivantes :
- charger l'accumulateur à courant constant pendant une première durée prédéterminée ;
- interrompre le courant de charge pendant une seconde durée prédéterminée ;
- mesurer la tension en circuit ouvert de l'accumulateur au cours de la seconde durée déterminée ;
- comparer la tension mesurée à une tension référence ; et
- répéter les étapes ci-dessus si la tension mesurée est inférieure à la tension référence.

Les accumulateurs alcalins (Ni-Cd et Ni-MH) se chargent à courant constant avec une détection de fin de charge en dE/dt ou dT/dt ou t (E : energie ; T : température ; t : temps).

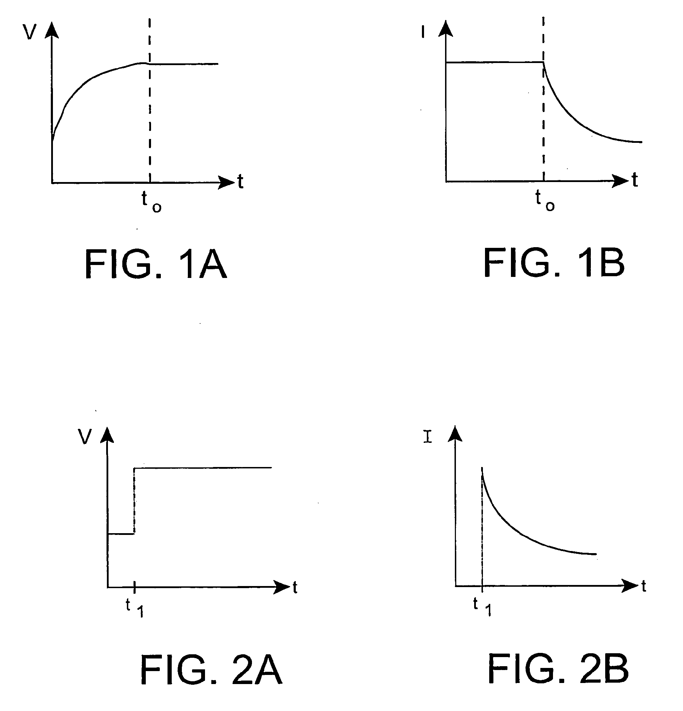

Les accumulateurs lithium-ion actuels (technologie LiCoO_{2/}Graphite) sont rechargés selon une procédure illustrée sur les figures 1A et 1B, avec une première étape à courant constant jusqu'à un temps t₀ (avec une tension de seuil), puis une seconde étape à tension constante. La demande de brevet EP 0797283 décrit un procédé de charge d'accumulateur à ions lithium à tension constante et avec une limitation de courant.

Une telle procédure a été développée pour tenir compte du fait que ces accumulateurs comprennent une électrode négative de graphite dont le potentiel de fonctionnement (typiquement 100mV/Li+/Li) est très proche de celui du dépôt de lithium métal. Par conséquent, en fin de charge l'électrode négative de graphite ne peut plus être chargée à courant constant sous peine de former des dendrites de lithium.

La première étape se termine donc pour une tension de seuil par exemple de 4,1 volts. Pendant la seconde étape la tension de l'accumulateur est maintenue égale à cette tension de seuil, ce qui permet d'assurer une fin de charge avec un courant décroissant progressivement. La charge a lieu alors soit lorsque le courant passe en dessous d'un courant de seuil (typiquement I_{n/}20), soit lorsque la durée totale des deux étapes est supérieure à une certaine valeur (typiquement entre 1 heure 30 et 2 heures).

Le courant Iₙ considéré ci-dessus est le courant nominal qui permet d'obtenir une charge de la totalité de la capacité de la batterie en 1 heure.

Les accumulateurs Li-ion à base d'électrode négative de graphite ne permettent pas de réaliser une charge démarrant directement à tension constante, sans contrôle ou limitation du courant. Le courant pourrait alors atteindre des valeurs très largement supérieures au courant maximal conseillé par la plupart des fabricants . Ce courant maximal est, en effet, de l'ordre de 2xIₙ, par exemple 2 ampères pour un accumulateur de lAh.

Si on prend l'exemple d'un accumulateur de 500 mAh et de résistance interne 50 mOhm, qui sont des valeurs classiques pour des accumulateurs commerciaux pour téléphone portable, le passage direct en tension constante à 4,1 volts (tension de fin de charge) conduirait à un pic de courant de plus de 10 ampères pour un accumulateur initialement à 3,6 volts avant la charge.

Un tel pic de courant pourrait avoir les inconvénients suivantes :
- une mise en court-circuit de l'accumulateur par dépôt de dendrites de lithium en lieu et place de l'insertion de Li+ lors de la phase de charge,
- un emballement thermique de l'accumulateur pouvant conduire à une ouverture de l'évent de sécurité avec fumées, voire flamme, voire explosion dans le pire des cas,
- dans le meilleur des cas, une réduction sensible de la durée de vie de l'accumulateur, avec une perte de capacité par cycle deux à trois fois supérieure aux 0,04% par cycle requis pour une application au téléphone portable.

De tels inconvénients sont principalement dus au fait que le potentiel d'insertion/désinsertion des ions lithium dans le graphite n'est que très légèrement supérieur à celui du dépôt de lithium métal, l'écart étant de l'ordre de 100 mV. Par conséquent à très fort courant, le potentiel de l'électrode négative à base de graphite passe largement en dessous du potentiel de dépôt de lithium.

Il en résulte un dépôt de lithium, éventuellement sous forme de dendrites, plutôt que l'insertion des ion lithium dans le graphite.

En raison de ces limitations relatives au courant maximal de charge, ces accumulateurs lithium-ion doivent être chargés pendant plus d'une heure, voire de deux à trois heures.

La présente invention a pour objet de pallier ces inconvénients en proposant un procédé de charge d'un accumulateur lithium-ion pour une nouvelle génération d'accumulateurs dits « de puissance », pour lesquels on réalise une charge directement à tension constante, sans limitation sur le courant de charge.

### EXPOSÉ DE L'INVENTION

La présente invention concerne un procédé de charge d'un accumulateur lithium-ion à électrode négative à potentiel de fonctionnement supérieur à 0,5 volts par rapport au couple Li+/Li, caractérisé en ce qu'il comprend une première étape de charge à une tension constante comprise entre 2 volts et 5 volts.

Avantageusement cette tension constante est inférieure à une valeur limite qui peut être égale à 3,5 volts, ou être caractérisée par la valeur limite d'une tension de seuil pour laquelle le rapport de la capacité déchargée sur la capacité chargée à courant constant est inférieur à 99%.

Avantageusement l'électrode négative de l'accumulateur li-ion est une électrode négative à base de Li₄Ti₅O₁₂. La durée de charge est inférieure à 5 minutes.

L'accumulateur peut être un accumulateur de type LiMO₂ où M=Mn, Co, Ni ou un mélange de ces matériaux, avec une tension constante supérieure à 2,7 volts. L'accumulateur peut également être un accumulateur du type LiM' PO_{4/}L₁₄Ti₅O₁₂, avec une tension constante supérieure à 2,2 volts, où M'=Fe, Mn, Co ou leur mélanges.

Le procédé de l'invention permet de diminuer de manière significative la durée de charge de l'accumulateur, ceci sans diminuer la durée de vie de celui-ci grâce à un rendement de charge proche de 100% (rapport en capacité déchargée et capacité chargée).

### BRÈVE DESCRIPTION DES DESSINS

Les figures 1A et 1B représentent respectivement une courbe de la tension en fonction du temps, et une courbe du courant en fonction du temps dans une procédure de charge d'un accumulateur de l'art connu,
Les figures 2A et 2B illustrent respectivement une courbe de la tension en fonction du temps, et une courbe du courant en fonction du temps pour le procédé de l'invention,
La figure 3 illustre l'évolution de la capacité pour un accumulateur 8mAh LiFePO_{4/}Li₄Ti₅O₁₂, en fonction du nombre de cycles, en utilisant le procédé de l'invention.

### EXPOSÉ DÉTAILLÉ DE MODES DE RÉALISATION PARTICULIERS

La présente invention concerne un procédé de charge d'un nouvel accumulateur lithium-ion basée sur une électrode négative à haut potentiel par rapport au lithium métal, par exemple un accumulateur lithium-ion à électrode négative de spinelle de titane lithié (Li₄Ti₅O₁₂) ou un accumulateur lithium-ion de type LiFePO₄/Li₄Ti₅O₁₂

Ce procédé, comme illustré sur les figures 2A et 2B, ne comprend qu'une étape, ou une succession d'étapes, à tension constante de fréquence et de durée variable à partir d'un temps t₁. La valeur de cette tension constante est ajustée entre 2 volts et 5 volts selon la nature des matériaux utilisés : Ainsi cette valeur est comprise entre 2,5 volts et 4 volts pour un accumulateur de type LiMO_{2/}Li₄ Ti₅ O₁₂, avec M=Ni, Co, Mn ou un mélange des trois. Cette valeur est comprise entre 2 volts et 3,5 volts pour un couple LiFePO_{4/}Li₄Ti₅O₁₂.

Cette valeur de tension constante est inférieure à une valeur limite pour éviter toute réaction de surcharge de l'accumulateur. L'accumulateur peut supporter une telle tension limite sans oxydation des solvants à l'électrode positive, et sans dépôt de lithium métal à l'électrode négative. Dans le cadre de l'invention, cette valeur limite est de l'ordre de 3,5 volts que ce soit pour un accumulateur de type LiMO₂/Li₄Ti₅O₁₂- ou LiM' PO_{4/}Li₄Ti₅O₁₂, où M' =Fe, Mn, Co ou leur mélanges.

Cette valeur limite peut également être caractérisée par la valeur limite d'une tension de seuil pour laquelle le rapport de la capacité déchargée sur la capacité chargée à courant constant est inférieur à un rapport donné, par exemple 99%.

Le procédé de l'invention permet de diminuer significativement la durée de charge de l'accumulateur, sans aucun effet néfaste sur sa durée de vie. Typiquement des gains de plus de 25% sont observés par rapport aux procédés de l'art antérieur pour des durées de charge nécessaires pour atteindre un même niveau de charge.

Le procédé de l'invention permet de supporter des pics de courant très élevés permettant des recharges en quelques secondes (200 à 300 C). Il n'est donc possible que dans le cas d'une électrode négative à potentiel élevé puisque, contrairement aux accumulateurs classiques à électrode négative à base de graphite, le dépôt de lithium métal est ainsi écarté. C'est le cas d'une électrode négative de type Li₄Ti₅O₁₂, dont le potentiel d'équilibre (pour un couple Li₄Ti₅O₁₂/Li₇Ti₅O₁₂) est de 1,55 volts par rapport au couple Li+/Li. La tension de l'accumulateur peut donc varier de plus d'un volt par rapport à sa tension d'équilibre sans risquer la formation de dendrites de lithium.

Pour un accumulateur lithium-ion de capacité 500 mAh et de 50 mOhms de résistance interne, le courant de pic peut ainsi atteindre 20 ampères, sans risque particulier et sans entraîner de réactions de surcharge.

### Exemples de réalisation

### 1) Réalisation d' un prototype LiMn₂O₄/Li₄Ti₅O₁₂ en emballage souple

On réalise des accumulateurs en associant une électrode positive LiMn₂O₄ sur collecteur en aluminium, un séparateur microporeux de type Celgard^{®} et une électrode négative de type Li₄Ti₅O₁₂ sur collecteur en aluminium. Ces trois éléments sont, au préalable, séchés en four sous vide, avant leur assemblage en accumulateur souple en boite à gants argon.

Avant le scellage de l'accumulateur, un électrolyte de type EC/DEC (EC=carbonate d'éthylène, DEC= carbonate de dièthyle) (LP40-Merck) est ajouté pour activer l'accumulateur.

Dans un premier temps on utilise un procédé de l'art connu. Un accumulateur de ce type est tout d'abord soumis à des cycles de charge/décharge à courant constant (avec des mêmes régimes en charge et en décharge, et un seuil de tension en charge fixé à 2,9 volts). Les régimes sont augmentés de Iₙ à 50xIₙ, en passant par 2xIₙ, 5xIₙ, 10xIₙ et 20xIₙ, comme illustré dans le tableau 1 ci-dessus. Ce tableau illustre les performances en puissance d'un accumulateur LiMn₂O₄/Li₄Ti₅O₁₂. A 10xIₙ, 70% de la capacité de l'accumulateur est chargée, ce qui correspond à une charge en 4 minutes et 12s.

Dans un second temps, par comparaison, on utilise le procédé de l'invention pour un accumulateur identique. On impose une charge à tension constante à 2,9 volts pendant une durée de 3 minutes La capacité chargée atteint 70% également, mais cette fois-ci ce niveau de charge est obtenu en 3 minutes seulement, comme illustré dans le tableau 1 ci-dessous.

Par conséquent, la présente invention permet de gagner 28% sur la durée de charge. Par ailleurs, ces performances sont maintenues sur plus de 2000 cycles, avec moins de 0,01% de pertes par cycle.

**Tableau 1**

| | Etat de l'art | | | | | | Invention |
|---|---|---|---|---|---|---|---|
| Taux de charge/décharge | In | 2xIn | 5xIn | 10xIn | 20xIn | 50xIn | Spécial |
| % de capacité chargée | 97% | 93% | 80-85% | 65-70% | 50-55% | 30-35% | 65-70% |
| Temps de charge | 1h | 28min | 10min | 4min | 1min 40s | 20s - 25s | 3 min |

### 2) Réalisation d'un prototype LiFePO₄/Li₄Ti₅O₁₂ de capacité 8mAh

Un accumulateur est réalisé en associant une électrode positive LiFePO₄ sur collecteur aluminium, un séparateur microporeux de type celgard et une électrode négative de type Li₄Ti₅O₁₂ sur collecteur aluminium. Ces trois éléments sont séchés en four sous vide au préalable, avant leur assemblage en pile bouton en boite à gants argon.

Avant le scellage de l'accumulateur, l'électrolyte de type EC/DEC (LP40-Merck) est ajouté pour activer l'accumulateur.

L'accumulateur est ensuite soumis à plus de 500 cycles, chaque cycle correspondant à une charge selon le procédé de l'invention (tension constante 2,9 volts pendant 3 minutes), suivie d'une décharge à courant constant (20C).

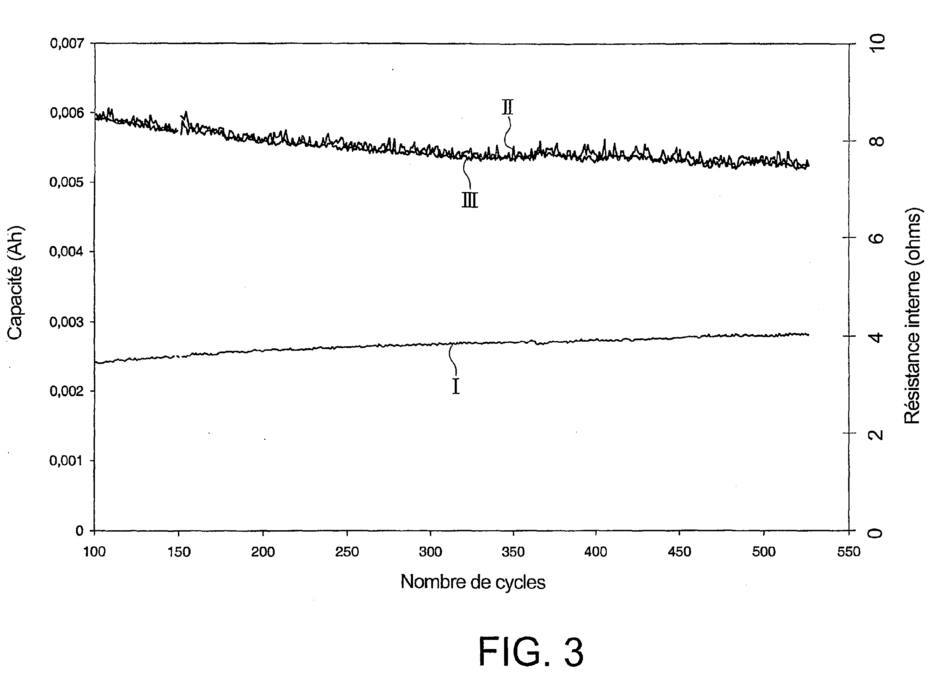

Au début, l'accumulateur charge puis décharge 6 mAh : 75% de capacité est donc chargée en 3 minutes. Au bout de plus de 500 cycles, la capacité échangée dépasse encore 5,2 mAh, comme illustré sur la figure 3. Sur cette figure la courbe I correspond à la résistance interne, la courbe II correspond capacité en charge, et la courbe III à la capacité en décharge. On a ainsi à une perte de 13,3% de capacité en 500 cycles, ce qui est mieux que le cahier des charges du téléphone portable (20% de pertes en 500 cycles).

## Revendications

1. Procédé de charge d'un accumulateur lithium-ion à électrode négative à potentiel de fonctionnement supérieur à 0,5 volts par rapport au couple Li+/Li, **caractérisé en ce qu'**il comprend une première étape de charge dans laquelle on réalise une charge directement à une tension constante comprise entre 2 volts et 5 volts.

2. Procédé selon la revendication 1, dans lequel la tension constante est inférieure à une valeur limite.

3. Procédé selon la revendication 2, dans lequel cette valeur limite est de l'ordre de 3,5 volts.

4. Procédé selon la revendication 2, dans lequel cette valeur limite est **caractérisée par** la valeur limite d'une tension de seuil pour laquelle le rapport de la capacité déchargée sur la capacité chargée à courant constant est inférieur à 99%.

5. Procédé selon la revendication 1, dans lequel l'électrode négative de l'accumulateur Li-ion est une électrode négative à base de Li₄Ti₅O₁₂.

6. Procédé selon la revendication 5, dans lequel la durée de charge est inférieure à 5 minutes.

7. Procédé selon la revendication 5, dans lequel l'accumulateur est un accumulateur de type LiMO₂ où M=Mn, Co, Ni ou un mélange de ces matériaux, avec une tension constante supérieure à 2,7 volts.

8. Procédé selon la revendication 1, dans lequel l'accumulateur est un accumulateur du type LiM' PO₄/Li₄Ti₅O₁₂, avec une tension constante supérieure à 2,2 volts, où M'=Fe, Mn, Co ou leurs mélanges.

## Claims

1. A method for charging a lithium-ion accumulator with a negative electrode at an operating potential larger than 0.5 volts relatively to the Li+/Li pair, **characterized in that** it comprises a first charging step at a constant voltage between 2 volts and 5 volts.

2. The method according to claim 1, wherein the constant voltage is less than a limiting value.

3. The method according to claim 2, wherein this limiting value is of the order of 3.5 volts.

4. The method according to claim 2, wherein this limiting value is **characterized by** the limiting value of a threshold voltage for which the ratio of the discharged capacity over the charged capacity at constant current is less than 99%.

5. The method according to claim 1, wherein the negative electrode of the Li-ion accumulator is a negative electrode based on Li₄Ti₅O₁₂.

6. The method according to claim 5, wherein the charging time is less than 5 minutes.

7. The method according to claim 5, wherein the accumulator is an LiMO₂ type accumulator where M = Mn, Co, Ni or a mixture of these materials, with a constant voltage larger than 2.7 volts.

8. The method according to claim 1, wherein the accumulator is a LiM' PO₄/Li₄Ti₅O₁₂ type accumulator, with a constant voltage larger than 2.2 volts, where M' = Fe, Mn, Co or mixtures thereof.

## Patentansprüche

1. Verfahren zum Laden eines Lithiumionen-Akkumulators mit einer negativen Elektrode mit einem Betriebspotential über 0,5 Volt in Bezug auf das Li+/Li-Paar,
**dadurch gekennzeichnet, dass** es einen ersten Ladeschritt umfasst, bei dem man eine Ladung direkt mit einer zwischen 2 Volt rund 5 Volt enthaltenen konstanten Spannung realisiert.

2. Verfahren nach Anspruch 1, bei dem die konstante Spannung niedriger als ein Grenzwert ist.

3. Verfahren nach Anspruch 2, bei dem dieser Grenzwert ungefähr 3,5 Volt beträgt.

4. Verfahren nach Anspruch 2, bei dem dieser Grenzwert durch den Grenzwert einer Schwellenspannung **gekennzeichnet** ist, für die das Verhältnis aus entladener Kapazität zu der bei konstantem Strom geladenen Kapazität niedriger als 99 % ist.

5. Verfahren nach Anspruch 1, bei dem die negative Elektrode des Lithiumionen-Akkumulators eine Negativelektrode auf der Basis von Li₄Ti₅O₁₂ ist.

6. Verfahren nach Anspruch 5, bei dem die Ladedauer niedriger als 5 Minuten ist.

7. Verfahren nach Anspruch 5, bei dem der Akkumulator ein Akkumulator des LiMo₂-Typs ist, wo M=Mn, Co, Ni oder eine Mischung dieser Materialien, mit einer konstanten Spannung höher als 2,7 Volt.

8. Verfahren nach Anspruch 1, bei dem der Akkumulator ein Akkumulator des Typs LiM'PO₄/Li₄Ti₅O₁₂ ist, mit einer konstanten Spannung höher als 2,2 Volt, wo M'=Fe, Mn, Co oder ihre Legierungen.
